(19) Europäisches Patentamt
European Patent Office
Office européen des brevets

(11) **EP 2 477 312 B1**

## (12) EUROPEAN PATENT SPECIFICATION

(45) Date of publication and mention
of the grant of the patent:
**26.05.2021  Bulletin 2021/21**

(21) Application number: **09849189.7**

(22) Date of filing: **09.09.2009**

(51) Int Cl.:
***H02K 1/27*** *(2006.01)*        ***H01F 41/02*** *(2006.01)*

(86) International application number:
**PCT/JP2009/065740**

(87) International publication number:
**WO 2011/030409 (17.03.2011 Gazette 2011/11)**

(54) **METHOD FOR MANUFACTURING A ROTOR FOR A PERMANENT MAGNET TYPE ROTARY MACHINE**

VERFAHREN ZUR HERSTELLUNG EINES ROTORS FÜR EINE DREHENDE PERMANENTMAGNETMASCHINE

PROCÉDÉ DE FABRICATION D'UN ROTOR POUR UNE MACHINE ROTATIVE DE TYPE À AIMANTS PERMANENTS

(84) Designated Contracting States:
**DE FR**

(43) Date of publication of application:
**18.07.2012  Bulletin 2012/29**

(73) Proprietor: **Shin-Etsu Chemical Co., Ltd.**
**Tokyo 100-0004 (JP)**

(72) Inventors:
• **MIYATA Koji**
**Tokyo 100-0004 (JP)**
• **MINOWA Takehisa**
**Tokyo 100-0004 (JP)**
• **NAKAMURA Hajime**
**Tokyo 100-0004 (JP)**

• **HIROTA Koichi**
**Tokyo 100-0004 (JP)**

(74) Representative: **Mewburn Ellis LLP**
**Aurora Building**
**Counterslip**
**Bristol BS1 6BX (GB)**

(56) References cited:
**EP-A1- 1 643 513        EP-A1- 2 254 131**
**EP-A2- 1 705 668        WO-A1-2007/119271**
**WO-A1-2010/064578        JP-A- 2005 269 693**
**JP-A- 2005 269 693        JP-A- 2005 354 899**
**JP-A- 2005 354 899        JP-A- 2008 061 333**

**Description**

TECHNICAL FIELD

This invention relates to a method for manufacturing a rotor for use in a permanent magnet rotary machine comprising a rotor comprising a rotor core and a plurality of permanent magnet segments embedded in the rotor core and a stator comprising a stator core having a plurality of slots and windings therein, the rotor and the stator being disposed to define a gap therebetween (generally referred to as interior permanent magnet (IPM) rotary machine), or a method for manufacturing a rotor for use in a permanent magnet rotary machine comprising a rotor comprising a rotor core and a plurality of permanent magnet segments mounted on the surface of the rotor core and a stator comprising a stator core having a plurality of slots and windings therein, the rotor and the stator being disposed to define a gap therebetween (generally referred to as surface permanent magnet (SPM) rotary machine), and more particularly, to a method for manufacturing a rotor for use in a permanent magnet structure rotary machine best suited as electric vehicle motors, power generators, and FA motors capable of high speed rotation.

BACKGROUND ART

Sintered Nd-base magnets have a growing range of application due to their excellent magnetic properties. Also in the field of rotary machines including motors and power generators, permanent magnet rotary machines utilizing sintered Nd-base magnets were developed to meet the recent demand for size, profile and weight reductions, performance enhancement and energy saving. Since IPM rotary machines of the structure wherein magnet parts are embedded within the rotor can utilize not only the torque by magnetization of the magnet, but also the reluctance torque by magnetization of the rotor yoke, research efforts have been made thereon as high-performance rotary machines. These rotary machines have a high level of mechanical safety in that throw-out of magnet parts by centrifugal force during rotation is prohibited since magnet parts are embedded within the rotor yoke made of silicon steel sheets or the like, and are capable of high-torque operation or operation at widely varying speeds by control of current phase, offering energy-saving, high-efficiency and high-torque motors. In these years, the IPM rotary machines find rapid widespread utilization as motors and power generators in electric vehicles, hybrid automobiles, high-performance air conditioners, industrial tools, and trains.

SPM rotary machines of the structure wherein magnet parts are attached to the surface of the rotor have advantages including efficient utilization of the strong magnetism of Nd base magnets, good linearity of motor torque, and ease of control. An optimized shape of magnet parts leads to motors with a minimal cogging torque. They are used as controlling motors in some electric vehicles, power steering systems, and the like.

Permanent magnets are situated in rotary machines such that they are exposed to high temperature due to the heat generated by windings and cores and have a likelihood of demagnetization by the diamagnetic field from the windings. There thus exists a demand for sintered Nd base magnets in which the coercive force which is an index of heat resistance and demagnetization resistance is above a certain level and the remanence (or residual magnetic flux density) which is an index of the magnitude of magnetic force is as high as possible.

Further, sintered Nd base magnets are conductors having an electric resistance of 100 to 200 $\mu\Omega$-cm. As the rotor rotates, the magnet undergoes a variation of magnetic flux density, by which eddy currents flow. Effective means for reducing eddy currents is to divide a magnet body to interrupt the eddy current path. While division of a magnet body into smaller pieces leads to a more reduction of eddy current loss, it becomes necessary to take into account such problems as an increase of manufacturing cost and a lowering of output due to a reduction of magnet volume by increased interstices.

The eddy current path runs in a plane perpendicular to the magnetization direction of a magnet, with a higher current density prevailing in an outer peripheral portion. The current density is also higher at a side closer to the stator. That is, the amount of heat generated by eddy currents is greater near the magnet surface, so that the magnet surface region assumes a higher temperature and becomes prone to demagnetization. To suppress demagnetization by eddy currents, a sintered Nd base magnet in which the coercive force which is an index of demagnetization resistance is higher in the magnet surface region than in the magnet interior is required.

Several measures are known to improve coercive force. An increase in the remanence of sintered Nd base magnet is achieved by increases in the volume fraction of $Nd_2Fe_{14}B$ compound and the degree of crystal orientation, and various improvements in process have been made therefor. As to an increase in coercive force, there are known various approaches including formation of crystal grains of finer size, use of an alloy composition having an increased Nd content, and addition of an effective element. Of these, the currently most common approach is the use of an alloy composition having Dy or Tb substituted for part of Nd. By substituting such elements for Nd of $Nd_2Fe_{14}B$ compound, the compound is increased in anisotropic magnetic field as well as coercive force. On the other hand, the substitution of Dy or Tb decreases the saturation magnetic polarization of the compound. Accordingly, the attempt to increase the coercive force by the above approach fails to avoid a lowering of remanence.

In sintered Nd base magnets, the coercive force is given by the magnitude of an external magnetic field created by nuclei of reverse magnetic domains at grain boundaries. Formation of nuclei of reverse magnetic domains is largely dictated by the structure of the grain boundary in such a manner that any disorder of grain structure in proximity to the boundary invites a disturbance of magnetic structure, helping formation of reverse magnetic domains. It is generally believed that a magnetic structure extending from the grain boundary to a depth of about 5 nm contributes to an increase of coercive force (Non-Patent Document 1: K. D. Durst and H. Kronmuller, "THE COERCIVE FIELD OF SINTERED AND MELT-SPUN NdFeB MAGNETS," Journal of Magnetism and Magnetic Materials, 68 (1987), 63-75).

The inventors found that by concentrating trace Dy or Tb only in proximity to the grain boundaries to increase the anisotropic magnetic field only in proximity to the boundaries, the coercive force can be increased while suppressing any decline of remanence (Patent Document 1: JP-B 5-31807). Subsequently, the inventors established a production method comprising separately preparing a $Nd_2Fe_{14}B$ compound composition alloy and a Dy or Tb-rich alloy, mixing them and sintering the mixture (Patent Document 2: JP-A 5-21218). In this method, the Dy or Tb-rich alloy becomes a liquid phase during the sintering and is distributed so as to surround the $Nd_2Fe_{14}B$ compound. As a consequence, substitution of Dy or Tb for Nd occurs only in proximity to grain boundaries in the compound, so that the coercive force can be effectively increased while suppressing any decline of remanence.

However, since the two types of alloy fine powders in the mixed state are sintered at a temperature as high as 1,000 to 1,100°C, the above-described method has a likelihood that Dy or Tb diffuses not only to the boundaries, but also into the interior of $Nd_2Fe_{14}B$ grains. An observation of the structure of an actually produced magnet shows that Dy or Tb has diffused to a depth of about 1 to 2 $\mu$m from the boundary in a grain boundary surface layer, the diffused area reaching 60% or more, calculated as volume fraction. As the distance of diffusion into grains becomes longer, the concentration of Dy or Tb near the boundaries becomes lower. An effective measure for positively suppressing the excessive diffusion into grains is by lowering the sintering temperature. However, this measure cannot be practically acceptable because it compromises densification by sintering. An alternative method of sintering at lower temperatures while applying stresses by means of a hot press or the like enables densification, but poses the problem of extremely reduced productivity.

On the other hand, it is reported that coercive force can be increased by machining a sintered magnet to a small size, applying Dy or Tb on the magnet surface by sputtering, and heat treating the magnet at a temperature lower than the sintering temperature, thereby causing Dy or Tb to diffuse only to grain boundaries (see Non-Patent Document 2: K. T. Park, K. Hiraga and M. Sagawa, "Effect of Metal-Coating and Consecutive Heat Treatment on Coercivity of Thin Nd-Fe-B Sintered Magnets," Proceedings of the Sixteen International Workshop on Rare-Earth Magnets and Their Applications, Sendai, p.257 (2000); and Non-Patent Document 3: K. Machida, H. Kawasaki, T. Suzuki, M. Ito and T. Horikawa, "Grain Boundary Tailoring of Sintered Nd-Fe-B Magnets and Their Magnetic Properties," Proceedings of the 2004 Spring Meeting of the Powder & Powder Metallurgy Society, p.202). These methods allow for more effective concentration of Dy or Tb at grain boundaries and succeed in increasing the coercive force without a substantial loss of remanence. As the magnet becomes larger in specific surface area, that is, the magnet body becomes smaller, the amount of Dy or Tb fed becomes larger, indicating that this method is applicable to only compact or thin magnets. However, there is still left the problem of poor productivity associated with the deposition of metal coating by sputtering or the like.

Patent Document 3: WO 2006/043348 discloses means for efficiently improving coercive force which has solved the foregoing problems and lends itself to mass-scale production. When a sintered $R^1$-Fe-B magnet body, typically sintered Nd base magnet body is heated in the presence of a powder on its surface, the powder comprising one or more of $R^2$ oxides, $R^3$ fluorides, and $R^4$ oxyfluorides wherein each of $R^1$ to $R^4$ is one or more elements selected from among rare earth elements inclusive of Y and Sc, $R^2$, $R^3$ or $R^4$ contained in the powder is absorbed in the magnet body, whereby coercive force is increased while significantly suppressing a decline of remanence. Particularly when $R^3$ fluoride or $R^4$ oxyfluoride is used, $R^3$ or $R^4$ is efficiently absorbed in the magnet body along with fluorine, resulting in a sintered magnet having a high remanence and a high coercive force.

Patent Document 4: JP 2005/354899 discloses a permanent magnet type motor, by dividing the permanent magnet into a plurality of parts to provide an insulating layer between the respective permanent magnets.

Patent Document 5: EP 1,705,668A relates to high-performance rare earth permanent magnets having a graded function, namely a surface layer with a higher coercive force than the interior.

Patent Document 6: JP 2005/269693A discloses a motor comprising a primary unit having a plurality of teeth parts projecting radially with a coil being applied to each teeth part, and a secondary unit coaxial with the central axis of the primary unit and having a plurality of permanent magnets arranged oppositely to the circumferential surface of the teeth part at a predetermined pitch in the circumferential direction to form a magnetic field, and the ratio between the number of magnet poles being formed by the permanent magnets and the number of teeth parts is 4:3, circumferential width of the teeth part on the inner circumferential surface is set smaller than the predetermined pitch.

Patent Document 7: EP 1,643,513A relates to a rare earth-iron boron based magnet such as a Nd-Fe-B or Pr-Fe-B based magnet, and particularly to a high-performance magnet effectively utilizing a scarce metal, such as Dy or the like.

Patent Document 8: EP 2,254,131A which forms part of the prior-art according to Article 54(3) EPC discloses a sintered Nd base magnet which is free of a decline of remanence, has a high coercive force, especially at the edges thereof, is unsusceptible to demagnetization even at high temperature, and is suited for use in permanent magnet rotary machines.

According to Patent Document 8, the magnetic segments for use in magnetic rotors are manufactured by coating a sintered Nd magnetic block with Dy or Tb oxide powder and then dividing the block into segments.

PRIOR-ART DOCUMENTS

PATENT DOCUMENTS

Patent Document 1: JP-B 5-31807

Patent Document 2: JP-A 5-21218

Patent Document 3: WO 2006/043348 pamphlet

Patent Document 4: JP 2005/354899A

Patent Document 5: EP 1,705,668A

Patent Document 6: JP 2005/269693

Patent Document 7: EP 1,643,513A

Patent Document 8: EP 2,254,131A

NON-PATENT DOCUMENTS

Non-Patent Document 1: K. D. Durst and H. Kronmuller, "THE COERCIVE FIELD OF SINTERED AND MELT-SPUN NdFeB MAGNETS," Journal of Magnetism and Magnetic Materials, 68 (1987), 63-75

Non-Patent Document 2: K. T. Park, K. Hiraga and M. Sagawa, "Effect of Metal-Coating and Consecutive Heat Treatment on Coercivity of Thin Nd-Fe-B Sintered Magnets," Proceedings of the Sixteen International Workshop on Rare-Earth Magnets and Their Applications, Sendai, p.257 (2000)

Non-Patent Document 3: K. Machida, H. Kawasaki, T. Suzuki, M. Ito and T. Horikawa, "Grain Boundary Tailoring of Sintered Nd-Fe-B Magnets and Their Magnetic Properties," Proceedings of the 2004 Spring Meeting of the Powder & Powder Metallurgy Society, p.202

SUMMARY OF THE INVENTION

Problem to Be Solved by the Invention

An object of the present invention which has been made in view of the above-discussed circumstances is to provide a method for manufacturing a rotor for use in a permanent magnet rotary machine having a high output and heat resistance.

Means for Solving the Problems

Making extensive investigations to attain the above object, the inventors have found that in an IPM or SPM rotary machine using a plurality of permanent magnet segments, better results are obtained when each of the permanent magnet segments is constructed as an assembly of further divided permanent magnet pieces (simply referred to as magnet pieces), and the coercive force or heat resistance near the surface of the magnet piece is higher than that in the interior of the magnet piece. In this connection, the inventors presumed that the method of Machida et al. and the method of WO 2006/043348 are suited for high-output rotary machines because of no loss of remanence, and since the coercive force near the surface of magnet pieces can be increased, the magnet pieces, when used in rotors in IPM or SPM rotary machines, are expected to minimize demagnetization due to heat generation by eddy currents. The inventors have found that application of such a method to individual magnet pieces of the permanent magnet assembly is effective in achieving the object of the invention, especially that a sintered Nd base magnet is used and divided into pieces for minimizing the heat generation by eddy currents, that the magnet pieces are used as the magnet for a rotor in a permanent magnet rotary machine, typically IPM or SPM rotary machine, and that magnet pieces in which the coercive force near their surface is higher than that in their interior, and in which heat resistance near their surface is improved are effective for use in a rotor in a permanent magnet rotary machine, typically IPM or SPM rotary machine.

More particularly, the inventors have found the following. When a permanent magnet rotary machine is loaded with magnet pieces into which a magnet has been divided for minimizing the heat generation by eddy current, the magnet pieces display a locally elevated temperature near their surface due to eddy current heat generation. For enhancing the heat resistance of magnet, it is effective to increase the coercive force near the surface of magnet whose temperature becomes elevated. Particularly for enhancing the coercive force near the surface of magnet, it is effective to use a sintered Nd base magnet having a coercive force profile from the surface toward the interior that is created by letting Dy or Tb diffuse from the magnet surface toward the interior. The diffusion of Dy or Tb from the surface toward the interior of magnet takes place mainly via grain boundaries. For example, the method of applying a Dy or Tb oxide powder, Dy or Tb fluoride powder or Dy or Tb-containing alloy powder to the magnet surface and letting Dy or Tb diffuse at a high temperature is effective as the diffusion reaction of Dy or Tb from the surface toward the interior of magnet. The present invention is predicated on these findings.

Accordingly, the present invention provides a method for manufacturing a rotor for permanent magnet rotary machines, as defined in the claims. The scope of the present invention is defined in the claims.

Advantageous Effects of the Invention

The invention is successful in providing a method for manufacturing a rotor for a permanent magnet rotary machine having a high output and heat resistance, the rotor of the machine being loaded with a permanent magnet, typically a sintered Nd base magnet, which has been divided into magnet pieces having a high remanence and a high coercive force, especially at an outer peripheral portion thereof, suited for use in rotors in IPM or SPM rotary machines.

BRIEF DESCRIPTION OF THE DRAWINGS

[FIG.1] FIG. 1 is a cross-sectional view of one exemplary IPM motor of 4 poles/6 slots comprising a rotor which may be manufactured according to the method of the invention.
**[FIG.2]** FIG. 2(A), (B) and (C) are cross-sectional views of exemplary magnet pieces which constitute a permanent magnet assembly in the IPM motor.
[Fig. 3] Fig. 3 illustrates one exemplary permanent magnet segment for use in the IPM motor, but which is not manufactured by a method according to the invention,
FIG. 3(A) being a perspective view of a magnet piece which has undergone diffusion treatment with Dy or Tb from all surfaces, FIG. 3(B) being a perspective view of an assembly of such magnet pieces.
[FIG.4] FIG. 4 illustrates the coercive force distribution in the magnet piece of FIG. 3(A), FIG. 4(A) being in side surface, and FIG. 4(B) being in end surface.
[FIG.5] FIG. 5(A) illustrates how eddy currents flow in the permanent magnet assembly of FIG. 3(B) in an IPM motor, and FIG. 5(B) illustrates the temperature distribution within the magnet pieces in the assembly.
[FIG.6] FIG. 6 illustrates another exemplary permanent magnet segment for use in the IPM motor manufactured in accordance with the method of the invention,
FIG. 6(A) being a perspective view of a magnet piece which has undergone diffusion treatment with Dy or Tb from four surfaces parallel to the magnetization direction, FIG. 6(B) being a perspective view of an assembly of such magnet pieces.
[FIG.7] FIG. 7 illustrates the coercive force distribution in the magnet piece of FIG. 6(A), FIG. 7(A) being in side surface, and FIG. 7(B) being in end surface.
[FIG.8] FIG. 8 is a cross-sectional view of one exemplary SPM motor of 4 poles/6 slots comprising a rotor which may be manufactured according to the method of the invention.
[FIG.9] FIGS. 9(A), 9(B) and 9(C) are cross-sectional views of exemplary magnet pieces which constitute a permanent magnet assembly in the SPM motor, but which are not manufactured by a method according to the present invention.
**[FIG.10]** FIG. 10 illustrates one exemplary permanent magnet segment for use in the SPM motor, but which is not manufactured by a method according to the present invention,
FIG. 10(A) being a perspective view of a magnet piece which has undergone diffusion treatment with Dy or Tb from all surfaces, FIG. 10(B) being a perspective view of an assembly of such magnet pieces.
[FIG.11] FIG. 11(A) illustrates how eddy currents flow in the permanent magnet assembly of FIG. 9(B) in an SPM motor, and FIG. 11(B) illustrates the temperature distribution within the magnet pieces in the assembly.
[FIG.12] FIGS. 12(A), 12(B) and 12(C) are perspective views of different permanent magnet assemblies.

EMBODIMENT FOR CARRYING OUT THE INVENTION

The invention relates to a method for manufacturing a rotor (1) for a permanent magnet rotary machine comprising a rotor (1) and a stator (2) comprising a stator core (14) having a plurality of slots and windings (13) therein, the rotor and the stator being disposed to define a gap therebetween,
the rotor comprising a rotor core (11) and a plurality of permanent magnet segments (12) embedded in the rotor core (11) or mounted on the surface of the rotor core (11) wherein each of said permanent magnet segments (12) is an assembly constructed by stacking 2 to 50 divided magnet pieces (12a) of parallelpiped shape, with their longitudinal directions, which are perpendicular to the magnetization direction, aligned in a plane perpendicular to the rotation axis of the rotor, wherein the divided magnet pieces (12a) are stacked along a direction parallel to said rotation axis and perpendicular to the magnetization direction of the magnet piece (12a) and bonded with an adhesive to form the assembly (12), and the magnet pieces (12a) are of a sintered Nd base rare earth magnet, each of the divided permanent magnet pieces (12a) has a coercive force at a surface and an interior, the coercive force near the four surfaces that are parallel to the magnetization direction of the magnet piece (12a) is higher than that in the interior of the magnet piece (12a) due to absorption/diffusion treatment with Dy or Tb; and the magnet piece (12a) has two untreated surfaces, characterised in that
the method comprising the steps of:

machining a starting magnet block to form untreated divided magnet pieces prior to said absorption/diffusion treatment,
then, conducting said absorption/diffusion treatment to form each of said divided magnet pieces (12a), and
integrating the resulting divided magnet pieces (12a) to form the permanent magnet segments (12).

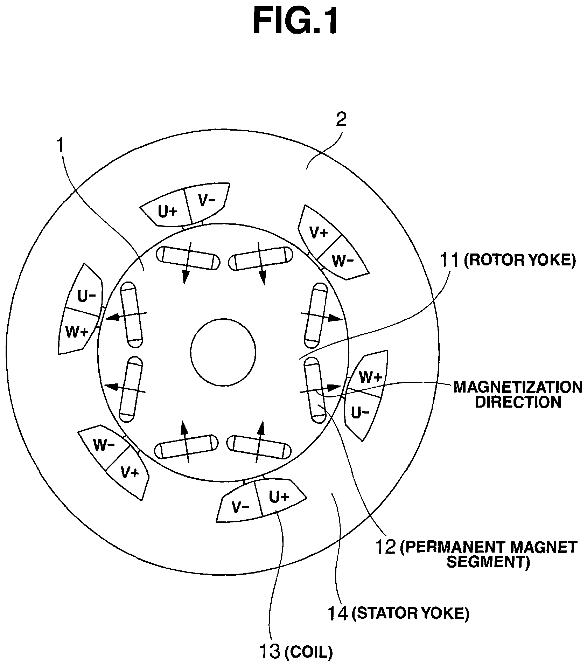

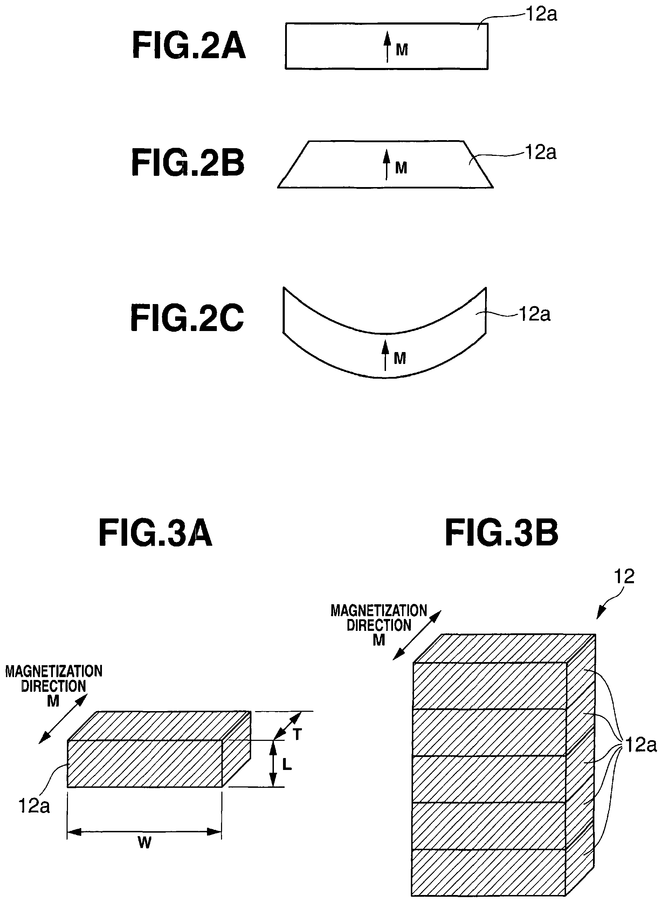

FIG. 1 illustrates an exemplary IPM rotary machine. The machine in FIG. 1 includes a rotor 1 and a stator 2. The rotor 1 has a four-pole structure comprising a rotor yoke 11 of laminated magnetic steel sheets and permanent magnet segments 12 embedded therein. Instead, simple rectangular magnet parts may be disposed at four poles. The number of poles is selected in accordance with a particular purpose of the rotary machine. The stator 2 has a six-slot structure of laminated magnetic steel sheets, with a coil 13 concentratedly wound on each teeth. The coil 13 is of a three-phase Y-connection of U, V and W phases. Also shown in FIG. 1 is a stator yoke 14. In FIG. 1, the symbols "+" and "-" attached to U, V and W indicate winding directions of coils, with "+" indicating a direction emerging from the plane of sheet and "-" indicating an entering direction. While the rotor and stator are positioned as shown in FIG. 1, an alternating current of cosine wave flows as the U phase, an alternating current having a 120° lead phase relative to the U phase flows as the V phase, and an alternating current having a 240° lead phase relative to the U phase flows as the W phase. Then the rotor rotates counter-clockwise by the interaction between the magnetic flux of permanent magnets and the magnetic flux of coils. In FIG. 1, the arrow associated with each permanent magnet segment 12 indicates a magnetization direction.
According to the invention, the permanent magnet segment 12 is an assembly of a plurality of further divided permanent magnet pieces 12a as shown in FIG. 3(B), for example.
Fig. 3B does not form part of the invention but represents background art that is useful for understanding the invention.
The magnet pieces 12a are of sintered Nd base rare earth magnet. The sintered Nd base rare earth magnet used herein may be one obtained by coarsely pulverizing a mother alloy, finely pulverizing, compacting and sintering in a standard way. As mentioned above, the invention uses a discrete sintered magnet in which a coercive force or heat resistance near the surface thereof is higher than a coercive force or heat resistance in the interior thereof, which is produced by letting Dy or Tb diffuse from the magnet surface toward the interior, and mainly via grain boundaries. More specifically, use is made of a magnet piece which is obtained by a procedure including depositing Dy or Tb on surfaces of a magnet piece by sputtering and heat treating the magnet piece at a temperature lower than the sintering temperature, thereby letting Dy or Tb diffuse only to grain boundaries, or another procedure including applying a powder of Dy or Tb oxide, fluoride or oxyfluoride to surfaces of a magnet piece and heat treating the magnet piece and powder in vacuum or inert gas at a temperature lower than the sintering temperature.
More preferably, the desired magnet piece may be obtained by applying a Dy or Tb oxide powder, Dy or Tb fluoride powder or Dy or Tb-containing alloy powder to surfaces of a magnet piece and then holding the magnet piece at a high temperature for letting Dy or Tb diffuse.

The permanent magnet (magnet piece) for use in the IPM rotary machine is obtained by machining a sintered magnet block into a predetermined shape using a grinding wheel, machining blade, wire saw or the like. The cross-sectional shape of the magnet piece is often a rectangular shape as shown in FIG. 2(A) from the standpoint of ease of working, although the magnet piece may be of a trapezoidal or arcuate shape as shown in FIG. 2(B) or 2(C) for the purpose of improving the performance of the rotary machine. It is noted that in FIG. 2, the arrow indicates a magnetization direction M.

The size of a magnet piece is not particularly limited. For diffusion treatment of a magnet piece with Dy or Tb, the proportion of diffusion of Dy or Tb increases as the specific surface area of a magnet piece becomes larger, i.e., the size of a magnet piece becomes smaller. It is then preferred that in FIGS. 3(A), 6(A), and 10(A), the smallest one of dimensions W, L, and T is up to 50 mm, more preferably up to 30 mm, and most preferably up to 20 mm. The lower limit of this dimension is not critical although it is practically at least 0.1 mm.

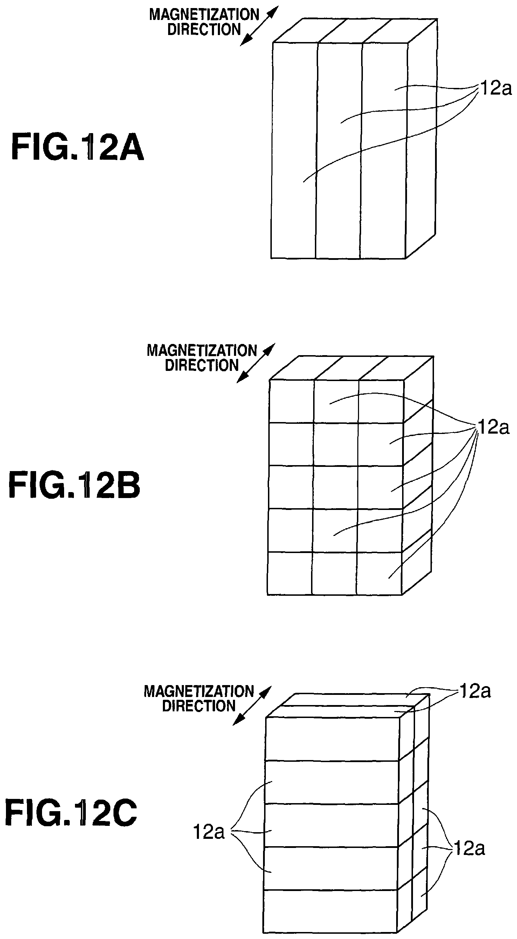

According to the invention, a starting magnet block is machined so that a permanent magnet body may have the desired properties, thus forming magnet pieces. The number of division of a permanent magnet segment is in the range of 2 to 50 divisions, preferably 4 to 25 divisions, and divided magnet pieces are bonded with an adhesive to form an assembly. The assembly may be any of various embodiments including an assembly constructed by stacking a plurality of magnet pieces 12a of parallelepiped or curved plate shape, with their W direction (axial or longitudinal direction) aligned with a horizontal direction, as shown in FIGS. 3(B), 6(B), and 10(B); an assembly constructed by disposing magnet pieces 12a of parallelepiped shape with their axial direction aligned with a vertical direction, juxtaposing a plurality of such magnet pieces in a row, and integrating them, as shown in FIG. 12(A); an assembly constructed by stacking a plurality of magnet pieces 12a of cubic shape in a perpendicular direction, juxtaposing such stacks in a row in a transverse direction, and integrating them, as shown in FIG. 12(B); and an assembly constructed by juxtaposing two stacks each consisting of magnet pieces of parallelepiped shape stacked as shown in FIG. 3(B), and integrating them, as shown in FIG. 12(C). The assembly is not limited to the illustrated embodiments.

The assembly of stacked magnet pieces is inserted into a bore in the rotor, constructing a magnet embedment rotor.

In the IPM rotary machine, the magnetic flux passing across the permanent magnet varies momentarily with rotation of the rotor, and this variation of magnetic field causes eddy currents to generate within the magnet. Eddy currents flow in a plane perpendicular to the magnetization direction of the magnet.

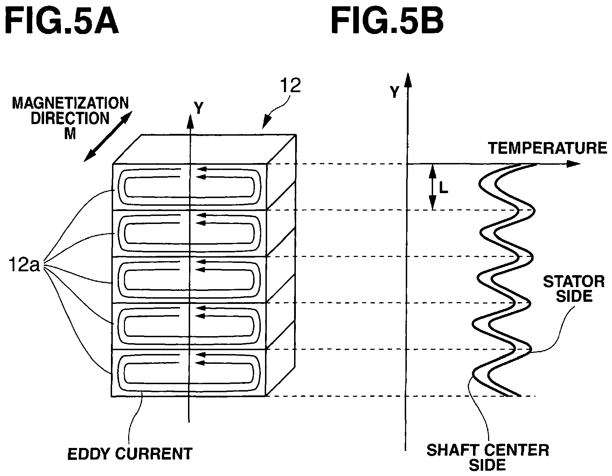

Even in the magnet piece 12a, eddy currents flow in a plane perpendicular to the magnetization direction. The flow of eddy currents and the temperature distribution within the magnet pieces are summarized in the schematic view of FIG. 5. As seen from FIG. 5, the density of eddy current becomes higher at an outer peripheral portion of each magnet piece where the temperature rises. Since the magnetic field variation is greater on the stator side, the temperature distribution in the magnetization direction is slightly higher on the stator side than on the rotating shaft center side. To suppress demagnetization due to eddy currents, an Nd magnet piece is required in which the coercive force (serving as an index of demagnetization resistance) is higher near the surface of the magnet piece corresponding to the magnet outer peripheral portion than in the magnet interior. The magnet interior where less heat is generated by eddy currents does not need a more than necessity coercive force.

FIG. 3 illustrates an embodiment outside the scope of the present invention wherein Dy or Tb is diffused from all surfaces of magnet piece 12a as shown in FIG. 3(A) (the shaded zones are surfaces from which Dy or Tb is diffused), and five magnet pieces 12a having a thus increased coercive force near the surface thereof are integrated with an adhesive into an assembly as shown in FIG. 3(B).

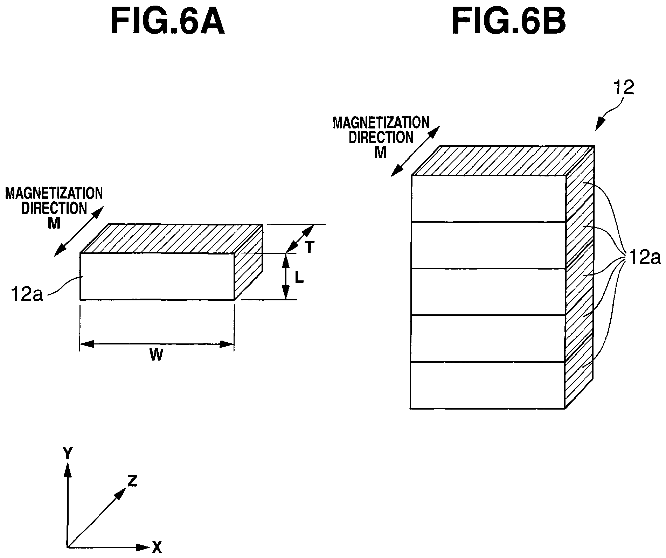

FIG. 6 illustrates an embodiment wherein absorption/diffusion treatment with Dy or Tb is performed from four surfaces of magnet piece 12a which extend parallel to the magnetization direction as shown in FIG. 6(A) (the shaded zones are surfaces from which Dy or Tb is diffused, and two non-shaded zones in X-Y plane are untreated), after which five magnet pieces 12a are integrated with an adhesive into an assembly as shown in FIG. 6(B) (the shaded zones are surfaces from which Dy or Tb is diffused). Even in the embodiment of FIG. 3 or 6, there are available Nd magnet pieces in which the coercive force (serving as an index of demagnetization resistance) is higher near the surface of the magnet piece corresponding to the magnet outer peripheral portion than in the magnet interior. As used herein, the term "near the surface" means a region which extends about 6 mm from the surface.

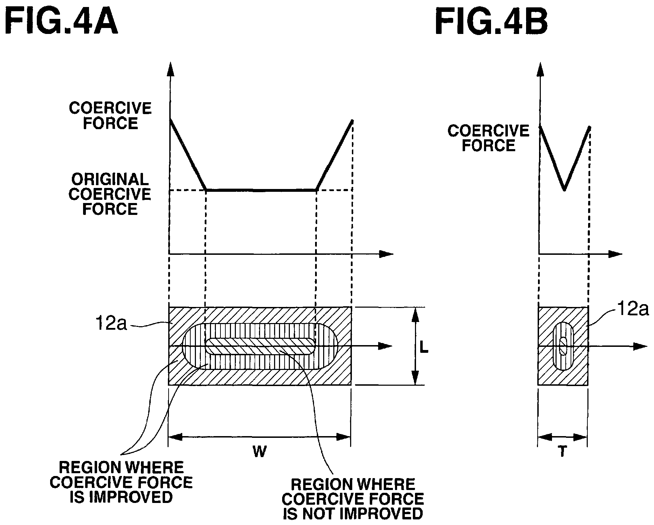

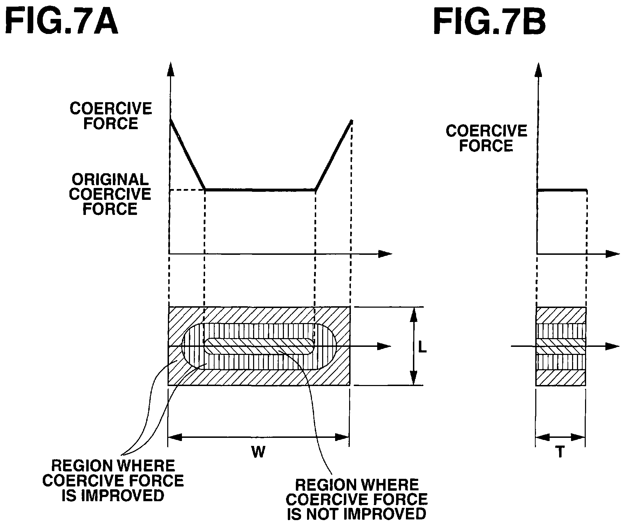

As a result of diffusion/absorption treatment with an 5 element having an extraordinary effect of enhancing magnetocrystalline anisotropy, Dy or Tb from surfaces of a sintered Nd base magnet body, the coercive force of the sintered Nd base magnet is efficiently increased without a substantial loss of remanence. Thus the sintered magnet body has a coercive force distribution. FIG. 4 shows the coercive force distribution of a magnet piece which has undergone diffusion/absorption treatment from all surfaces thereof as shown in FIG. 3. The coercive force near the magnet surface is higher than that in the magnet interior. FIG. 7 shows the coercive force distribution of a magnet piece which has undergone diffusion/absorption treatment from four surfaces thereof parallel to the magnetization direction as shown in FIG. 6. The coercive force near the magnet surface is higher than that in the magnet interior, but the coercive forces near those surfaces perpendicular to the magnetization direction are not improved because of no diffusion/absorption from these surfaces. In the case of the IPM rotary machine, since the heat generation by eddy currents is especially high on those four surfaces (X-Z and Y-Z planes) parallel to the 5 magnetization direction, even the coercive force distribution of FIG. 7 may improve heat resistance. Any of these embodiments is successful in increasing the coercive force near the magnet surface, providing a coercive force distribution effective for improving heat resistance against ) the heat generation by eddy currents.

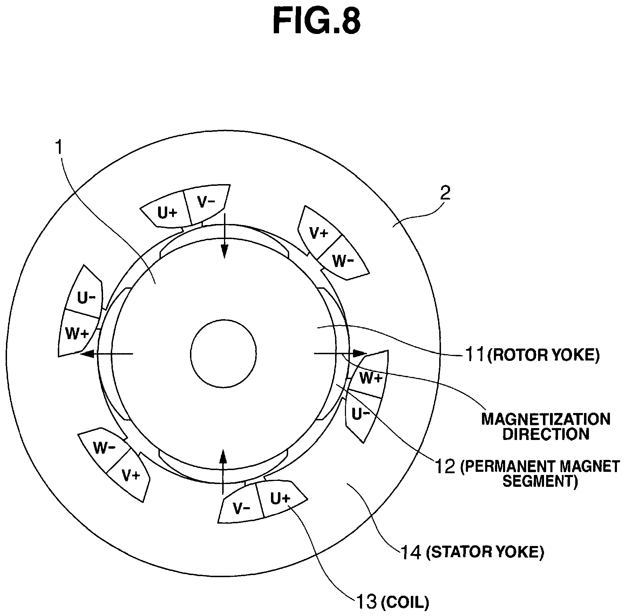

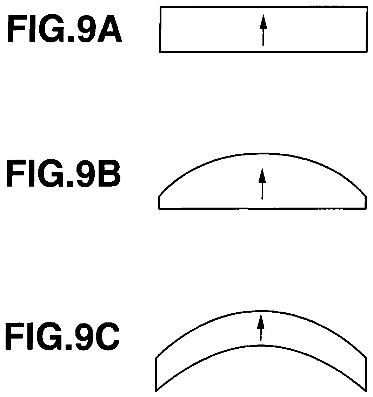

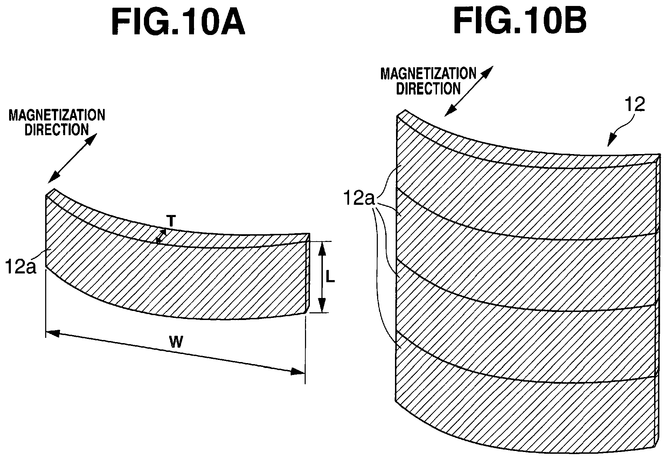

FIG. 8 illustrates an exemplary SPM rotary machine. The machine includes a rotor 1 comprising a rotor yoke 11 and a plurality of permanent magnet segments 12 attached to the surface thereof and a stator 2 having a plurality of slots, the rotor and the stator being disposed to define a gap therebetween. The stator 2 is the same as that of the IPM rotary machine. This rotary machine is utilized as AC servo motors and similar motors requiring high-precision torque control. The torque must be minimized in ripple. Accordingly, it is not preferable that the magnetic flux distribution in the gap varies with the positional relationship between the stator slot and the permanent magnet upon rotation of the rotor, to produce a cogging torque (torque with no current flow across the coils) and that torque ripples occur when electric current is flowed across the coils for driving. The torque ripples exacerbate controllability and cause noise. Used as means for reducing the cogging torque is a divided permanent magnet piece 12a of the shape that end portions are thinner than a central portion as shown in FIGS. 9(C) and 10(A). Then the magnetic flux distribution becomes smooth at the magnet end portion which is a magnetic pole transition area having a large change of magnetic flux distribution, resulting in a reduction of cogging torque. Accordingly, a C-shaped magnet piece as shown in FIGS. 9(C) and 10(A) is often used while a D-shaped magnet piece as shown in FIG. 9(B) may also be used. Also acceptable from the standpoint of ease of fabrication is a rectangular magnet piece as shown in FIG. 9(A).

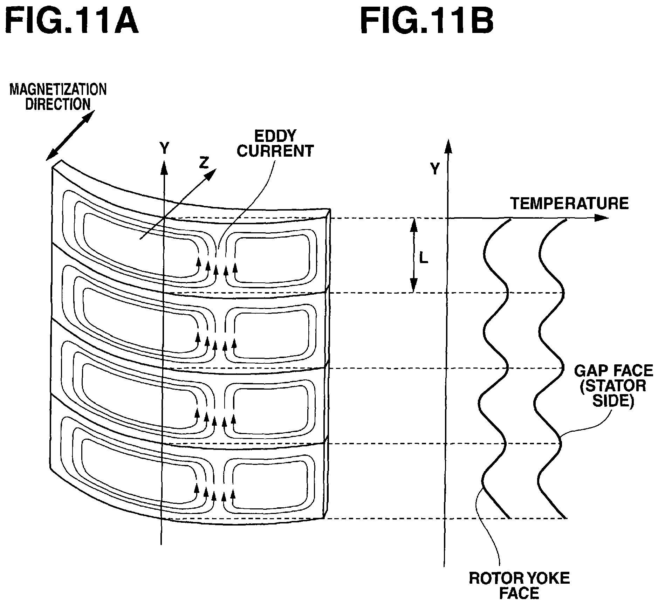

Also in the SPM rotary machine, eddy currents flow in the permanent magnet. A magnet piece 12a as shown in FIG. 10(A) is effective for reducing eddy currents. FIG. 10(B) illustrates an assembly of adhesively integrated four magnet pieces 12a into which Dy or Tb has been diffused from surfaces thereof (the shaded zones are surfaces from which Dy or Tb are diffused). Even in the magnet piece 12a, eddy currents flow in a plane perpendicular to the magnetization direction. The flow of eddy currents and the temperature distribution within the magnet pieces are summarized in the schematic view of FIG. 11. As seen from FIG. 11, the density of eddy currents becomes higher at an outer peripheral portion of each magnet piece where the temperature rises. Since the magnetic field variation is greater on the stator side, the temperature distribution in the magnetization direction is higher on the stator side. The temperature distribution in the magnetization direction is greater than in the IPM motor. To suppress demagnetization due to eddy currents, the invention uses an Nd magnet piece in which the coercive force (serving as an index of demagnetization resistance) is higher near the surface of the magnet piece corresponding to the magnet outer peripheral portion and stator side than in the magnet interior.

As in the case of IPM rotary machine, diffusion/absorption treatment with an element having an effect of enhancing magnetocrystalline anisotropy, Dy or Tb from surfaces of a sintered Nd base magnet results in a magnet piece having an increased coercive force near the surface thereof without a concomitant substantial loss of remanence. Thus a rotor for SPM rotary machine having improved heat resistance is provided.

EXAMPLE

Examples are given below for illustrating some embodiments of the present invention, but the scope of the invention is not limited thereby. Examples 1, 3 and 4 (i.e. using M1, M3 and M4) do not form part of the invention but represent background art that is useful for understanding the invention. The present invention relates to a method for manufacturing a rotor for a permanent magnet rotary machine.

[Examples and Comparative Examples]

<Magnetic properties of Examples and Comparative Examples>

A thin plate of alloy was prepared by a so-called strip casting technique, specifically by weighing predetermined amounts of Nd, Co, Al and Fe metals having a purity of at least 99% by weight and ferroboron, high-frequency heating in an argon atmosphere for melting, and casting the alloy melt on a copper single roll in an argon atmosphere. The resulting alloy was composed of 13.5 atom% Nd, 1.0 atom% Co, 0.5 atom% Al, 5.8 atom% B, and the balance of Fe and is designated Alloy A. Alloy A was hydrided and then heated at 500°C for partial dehydriding while evacuating to vacuum. By this so-called hydriding pulverization, the alloy was pulverized into a coarse powder having a size of up to 30 mesh. Another alloy was prepared by weighing predetermined amounts of Nd, Tb, Fe, Co, Al and Cu metals having a purity of at least 99% by weight and ferroboron, high-frequency heating in an argon atmosphere for melting, and casting. The resulting alloy was composed of 20 atom% Nd, 10 atom% Tb, 24 atom% Fe, 6 atom% B, 1 atom% Al, 2 atom% Cu, and the balance of Co and is designated Alloy B. Using a Brown mill in a nitrogen atmosphere, Alloy B was coarsely pulverized to a size of up to 30 mesh.

Subsequently, Alloy A powder and Alloy B powder were weighed in amounts of 90% and 10% by weight, respectively, and mixed together on a V blender which had been purged with nitrogen. On a jet mill using high-pressure nitrogen gas, the mixed powder was finely pulverized to an average particle size of 4 $\mu$m. The resulting fine powder was compacted in a nitrogen atmosphere under a pressure of about 1 ton/cm$^2$ while being oriented in a magnetic field of 15 kOe. The green compact was then placed in a sintering furnace in an argon atmosphere where it was sintered at 1,060°C for 2 hours, obtaining a permanent magnet block. Using a diamond grinding wheel, the permanent magnet block was machined on all the surfaces into parallelepiped magnet pieces as shown in FIG. 3. These magnet pieces were dimensioned to L=18 mm, W=70 mm and T=20 mm (T in magnetic anisotropy direction). C-shaped magnet pieces as shown in FIG. 10 were also manufactured by all surface machining. These magnet pieces were dimensioned to L=22.5 mm, W=100 mm and T=11 mm. The machined magnet pieces were cleaned with an alkaline solution, pickled and dried. Steps of rinsing with deionized water were included before and after each cleaning step.

Next, dysprosium fluoride having an average particle size of 5 $\mu$m was mixed with ethanol at a weight fraction of 50%, in which the parallelepiped and C-shaped magnet pieces were immersed for one minute with ultrasonic waves being applied. The magnet pieces were pulled up and immediately dried with hot air. At this point, the filling factor of dysprosium fluoride in the magnet surface-surrounding space was 45%. The magnet pieces were subjected to absorption treatment in an argon atmosphere at 900°C for one hour, then to aging treatment at 500°C for one hour, and quenched, obtaining parallelepiped magnet pieces M1 and C-shaped magnet pieces M3. For comparison purposes, only heat treatment was carried out to produce parallelepiped magnet pieces P1 and C-shaped magnet pieces P2.

Magnet pieces of the same shapes as M1 and M3 were provided. Terbium fluoride having an average particle size of 5 $\mu$m was mixed with ethanol at a weight fraction 50% and applied to four surfaces of each magnet piece which extended parallel to the magnetization direction. The magnet pieces were immediately dried with hot air. At this point, the filling factor of terbium fluoride in the magnet surface-surrounding space was 45%. The magnet pieces were subjected to absorption treatment in an argon atmosphere at 900°C for one hour, then to aging treatment at 500°C for one hour, and quenched, obtaining treated magnet pieces. The parallelepiped magnet pieces are designated M2 and the C-shaped magnet pieces designated M4.

The magnetic properties of these magnet pieces (as measured by a vibrating sample magnetometer) are shown in Table 1. For magnetic property measurement, cubic samples of 1 mm one side were cut out so that the magnetic properties of different regions of a magnet piece were evaluated.

Location of magnetic property measuring samples

Magnetic property measuring samples are 1 mm cubic.

1 mm cubic from surface to 1 mm
M1, M2, P1:  center in W direction,
center in T direction,
from surface to 1 mm in L direction
M3, M4, P2:  center in W direction,
center in L direction,
from surface to 1 mm in T direction

Center

1 mm cubic exactly at the center
M1, M2, P1:  center in W direction,
center in T direction,
center in L direction (9 mm from surface)
M3, M4, P2:  center in W direction,
center in L direction,
center in T direction (5.5 mm from surface)

As compared with the coercive force of magnet piece P1 not subjected to dysprosium absorption treatment, the permanent magnet piece M1 showed a coercive force increase of 500 kAm$^{-1}$ at the outermost periphery. Since the magnet interior was at a distance of 9 mm from the surface, the interior absorbed no dysprosium, with its coercive force kept unchanged. A distribution of coercive force was determined, finding coercive force increases in a region extending 6 mm from the surface. The magnet piece M2 subjected to terbium absorption treatment also showed coercive force increases in a region extending 6 mm from the surface, marking a coercive force increase of 800 kAm$^{-1}$ as compared with the coercive force of magnet piece P1 not subjected to absorption treatment. The permanent magnet pieces had a decline of remanence which was as small as 5 mT. Further, the permanent magnet piece M3 showed a coercive force increase of 500 kAm$^{-1}$ at the outermost periphery. Since the magnet interior was at a closer distance of 5.5 mm from the surface than in magnet piece M1, it showed a coercive force increase of 100 kAm$^{-1}$ due to prevailing diffusion and absorption of dysprosium from the surfaces perpendicular to the magnetization direction. The magnet piece M4 subjected to terbium absorption treatment marked a coercive force increase of 800 kAm$^{-1}$ at the surface and 200 kAm$^{-1}$ at the interior, as compared with the coercive force of magnet piece P1 not subjected to absorption treatment. For comparison purposes, a permanent magnet was prepared using an alloy composition having Dy substituted for part of Nd in Alloy A, so as to achieve a coercive force increase of 500 kAm$^{-1}$, but a remanence drop of 50 mT was found.

By backscattered electron image under SEM and electron probe microanalysis (EPMA) of magnet piece M1, Dy and F were observed in the magnet. Since the magnet prior to the treatment does not contain Dy and F, the presence of Dy and F in magnet piece M1 is attributable to the absorption treatment. Dy absorbed concentrates near grain boundaries. On the other hand, fluorine (F) is also present in the grain boundary portion and bonds with oxides (contained in the magnet prior to the treatment as incidental impurities) to form oxyfluorides. The distribution of Dy enabled to increase the coercive force while minimizing a decline of remanence.

Table 1

| Magnetic properties | | | | | |
|---|---|---|---|---|---|
| | Magnet piece | | Br (T) | Hcj (kAm$^{-1}$) | (BH)max (kJm$^{-3}$) |
| Example 1 | M1 | Surface | 1.415 | 1,500 | 390 |
| | | Center | 1.420 | 1,000 | 395 |
| Example 2 | M2 | Surface | 1.415 | 1,800 | 390 |
| | | Center | 1.420 | 1,000 | 395 |
| Example 3 | M3 | Surface | 1.415 | 1,500 | 390 |
| | | Center | 1.418 | 1,100 | 394 |
| Example 4 | M4 | Surface | 1.415 | 1,800 | 390 |
| | | Center | 1.418 | 1,200 | 394 |
| Comparative Example 1 | P1 | Surface | 1.420 | 1,000 | 395 |
| | | Center | 1.420 | 1,000 | 395 |
| Comparative Example 2 | P2 | Surface | 1.420 | 1,000 | 395 |
| | | Center | 1.420 | 1,000 | 395 |

<Performance of IPM motors using magnets of Examples 1, 2 & Comparative Example 1> and

Magnet pieces M1, M2 and magnet pieces P1 of Comparative Example are incorporated in permanent magnet motors, whose performance is described below.

The permanent magnet motor is an IPM motor as shown in FIG. 1. The rotor includes a rotor yoke of four-pole structure consisting of laminated 0.5 mm magnetic steel sheets having permanent magnet segments embedded therein. The rotor yoke has an outer diameter of 312 mm and a height of 90 mm. The permanent magnet segments embedded each have a width of 70 mm, a dimension of 20 mm in the magnetic anisotropy direction, and an axial dimension of 90 mm. The magnet segment consists of five axially divided magnet pieces. The stator has a six-slot structure of laminated 0.5 mm magnetic steel sheets with a concentrated winding coil of 60 turns on each teeth. The coils are of a three-phase Y-connection of U, V and W phases.

As shown in FIG. 3, five magnet pieces M1 or M2 subjected to the treatment or five untreated magnet pieces P1 were joined with an epoxy adhesive into an assembly, which was magnetized and incorporated in the rotor yoke. The motors having the magnet pieces M1, M2, and P1 incorporated therein are designated MM1, MM2, and MP1, respectively. The motor was continuously operated for one hour at a revolution of 2,400 rpm and a RMS current of 50 A for each phase. From the ratio of the torque immediately after the continuous operation to the torque when operated again from the fully cooled state after the continuous operation, a percentage of demagnetization in the permanent magnet was evaluated. The results are summarized in Table 2. Provided that A is the torque immediately after the continuous operation and B is the torque when operated again from the fully cooled state after the continuous operation, a percentage of demagnetization is given by the following equation.

$$\texttt{Percent demagnetization = (A+B)/A (\%)}$$

In the states A and B which are immediately after operation, the magnets are at the same temperature. A change corresponds to a reduction of the magnet temperature by an eddy current loss during continuous operation. Under these test conditions, motor MP1 of Comparative Example 1 showed a torque reduction of 11% whereas motors MM1 and MM2 of Examples showed little or no torque reduction. It is demonstrated from these data that the demagnetization by an eddy current loss is minimized by the improved coercive force near the magnet surface.

Table 2

| Percent demagnetization of IPM motors | | | |
|---|---|---|---|
| | Motor | Magnet piece | Demagnetization, % |
| Example 1 | MM1 | M1 | 0 |
| Example 2 | MM2 | M2 | 0 |
| Comparative Example 1 | MP1 | P1 | 11 |

<Performance of SPM motors using magnets of Examples 3, 4 & Comparative Example 2>

Magnet pieces M3, M4 and magnet pieces P2 of Comparative Example are incorporated in permanent magnet motors, whose performance is described below.

The permanent magnet motor is an SPM motor as shown in FIG. 8. The rotor includes a rotor yoke of four-pole structure consisting of laminated 0.5 mm magnetic steel sheets having permanent magnet segments adhesively attached to the surface thereof. The rotor has an outer diameter of 312 mm and a height of 90 mm. The permanent magnet segments embedded each have a width of 100 mm, a dimension of 11 mm in the magnetic anisotropy direction, and an axial dimension of 90 mm. The magnet segment consists of four axially divided magnet pieces. The stator is the same as in Examples 1, 2 and Comparative Example 1.

As shown in FIG. 10, four magnet pieces M3 or M4 subjected to the treatment or four untreated magnet pieces P2 were joined with an epoxy adhesive into an assembly, which was magnetized and adhesively attached to the surface of the rotor yoke. The motors having the magnet pieces M3, M4, and P2 incorporated therein are designated MM3, MM4, and MP2, respectively. The motor was continuously operated for one hour at a revolution of 2,400 rpm and a RMS current of 50 A for each phase. From the ratio of the torque immediately after the continuous operation to the torque when operated again from the fully cooled state after the continuous operation, a percentage of demagnetization in the permanent magnet was evaluated. The results are summarized in Table 3. Under these test conditions, motor MP2 of Comparative Example 2 showed a torque reduction of 32% whereas motors MM3 and MM4 of Examples showed little or no torque reduction. For the SPM motors, it is demonstrated that the demagnetization by an eddy current loss is minimized by the improved coercive force near the magnet surface.

Table 3

| Percent demagnetization of SPM motors | | | |
|---|---|---|---|
| | Motor | Magnet piece | Demagnetization, % |
| Example 3 | MM3 | M3 | 0 |
| Example 4 | MM4 | M4 | 0 |
| Comparative Example 2 | MP2 | P2 | 32 |

While Examples refer to permanent magnet motors, permanent magnet power generators have the same advantages because they are of the same structure.

## EXPLANATION OF REFERENCE NUMERALS

1     rotor
2     stator
11    rotor yoke
12    permanent magnet segment
12a   divided permanent magnet piece
13    coil
14    stator yoke

**Claims**

1. A method for manufacturing a rotor (1) for a permanent magnet rotary machine comprising a rotor (1) and a stator (2) comprising a stator core (14) having a plurality of slots and windings (13) therein, the rotor and the stator being disposed to define a gap therebetween,

   the rotor comprising a rotor core (11) and a plurality of permanent magnet segments (12) embedded in the rotor core (11) or mounted on the surface of the rotor core (11) wherein each of said permanent magnet segments (12) is an assembly constructed by stacking 2 to 50 divided magnet pieces (12a) of parallelpiped shape, with their longitudinal directions, which are perpendicular to the magnetization direction, aligned in a plane perpendicular to the rotation axis of the rotor, wherein the divided magnet pieces (12a) are stacked along a direction parallel to said rotation axis and perpendicular to the magnetization direction of the magnet piece (12a) and bonded with an adhesive to form the assembly (12), and the magnet pieces (12a) are of a sintered Nd base rare earth magnet, each of the divided permanent magnet pieces (12a) has a coercive force at a surface and an interior, the coercive force near the four surfaces that are parallel to the magnetization direction of the magnet piece (12a) is higher than that in the interior of the magnet piece (12a) due to absorption/diffusion treatment with Dy or Tb; and the magnet piece (12a) has two untreated surfaces, wherein the method comprising the steps of:

   machining a starting magnet block to form untreated divided magnet pieces prior to said absorption/diffusion treatment,
   then, conducting said absorption/diffusion treatment to form each of said divided magnet pieces (12a), and integrating the resulting divided magnet pieces (12a) to form the permanent magnet segments (12).

2. The method of claim 1, wherein the magnet pieces (12a) have a rectangular cross-section.

3. The method of claim 1 or 2, wherein the step of letting Dy or Tb diffuse from the four surfaces toward the interior of the sintered Nd base rare earth magnet piece (12a) includes applying a Dy or Tb oxide powder, a Dy or Tb fluoride powder or a Dy or Tb-containing alloy powder to surfaces of the magnet piece, then holding the magnet piece (12a) at a high temperature sufficient to diffuse Dy or Tb.

**Patentansprüche**

1. Verfahren zur Fertigung eines Rotors (1) für eine Permanentmagnetdrehmaschine, die einen Rotor (1) und einen Stator (2), umfassend einen Statorkern (14) mit einer Vielzahl an Schlitzen und Wicklungen (13) darin, umfasst, wobei der Rotor und der Stator so angeordnet sind, dass zwischen ihnen ein Spalt definiert wird,

   wobei der Rotor einen Rotorkern (11) und eine Vielzahl von Permanentmagnetsegmenten (12) umfasst, die in den Rotorkern (11) eingebettet oder auf der Oberfläche des Rotorkerns (11) angebracht sind, wobei jedes der Permanentmagnetsegmente (12) eine Anordnung darstellt, die durch Stapeln von 2 bis 50 geteilten Parallelepiped-förmigen Magnetstücken (12a) konstruiert sind, wobei ihre Längsrichtungen, die normal auf die Magnetisierungsrichtung stehen, in einer Ebene ausgerichtet sind, die normal auf die Rotationsachse des Rotors steht, wobei die geteilten Magnetstücke (12a) entlang einer zur Rotationsachse parallelen und zur Magnetisierungsrichtung des Magnetstücks (12a) normal stehenden Richtung gestapelt und mit einem Klebstoff haftschlüssig verbunden sind, um die Anordnung (12) auszubilden, und die Magnetstücke (12a) Seltenerdsintermagnete auf Nd-Basis sind, wobei jedes der geteilten Permanentmagnetstücke (12a) an einer Oberfläche und einem Inneren eine Koerzitivkraft aufweist, wobei die Koerzitivkraft in der Nähe der vier Oberflächen, die parallel zur Magnetisierungsrichtung des Magnetstücks (12a) liegen, aufgrund einer Absorptions-/Diffusionsbehandlung mit Dy oder Tb höher als jene im Inneren des Magnetstücks (12a) ist; und das Magnetstück (12a) zwei unbehandelte Oberflächen aufweist, wobei das Verfahren die folgenden Schritte umfasst:

das Bearbeiten eines Ausgangsmagnetblocks zum Ausbilden von unbehandelten geteilten Magnetstücken vor der Absorptions-/Diffusionsbehandlung,
dann das Durchführen der Absorptions-/Diffusionsbehandlung, um jedes der geteilten Magnetstücke (12a) auszubilden, und
das Einbauen der resultierenden geteilten Magnetstücke (12a), um die Permanentmagnetsegmente (12) auszubilden.

**2.** Verfahren nach Anspruch 1, wobei die Magnetstücke (12a) einen rechteckigen Querschnitt aufweisen.

**3.** Verfahren nach Anspruch 1 oder 2, wobei der Schritt des Diffundierenlassens von Dy oder Tb von den vier Oberflächen ins Innere des Seltenerdsintermagnetstücks (12a) auf Nd-Basis das Auftragen eines Dy- oder Tb-Oxidpulvers, eines Dy- oder Tb-Fluoridpulvers oder eines Dy- oder Tb-hältigen Legierungspulvers auf Oberflächen des Magnetstücks, dann Halten des Magnetstücks (12a) bei einer hohen Temperatur, die ausreicht, um Dy oder Tb zu diffundieren, umfasst

## Revendications

**1.** Procédé de fabrication d'un rotor (1) pour une machine rotative à aimants permanents comprenant un rotor (1) et un stator (2) comprenant un noyau de stator (14) comportant une pluralité d'encoches et d'enroulements (13) en son sein, le rotor et le stator étant disposés de façon à définir un entrefer entre eux,
le rotor comprenant un noyau de rotor (11) et une pluralité de segments d'aimants permanent (12) enfouis à l'intérieur du noyau de rotor (11) ou montés sur la surface du noyau de rotor (11), dans lequel chacun desdits segments d'aimants permanents (12) est un ensemble construit en empilant 2 à 50 pièces d'aimant divisées (12a) de forme parallélépipédique, avec leurs directions longitudinales, qui sont perpendiculaires à la direction d'aimantation, alignées dans un plan perpendiculaire à l'axe de rotation du rotor, dans lequel les pièces d'aimant divisées (12a) sont empilées le long d'une direction parallèle audit axe de rotation et perpendiculaire à la direction d'aimantation de la pièce d'aimant (12a) et collées avec un adhésif pour former l'ensemble (12), et les pièces d'aimant divisées (12a) sont aimant de terre rare à base de Nd fritté, chacune des pièces d'aimant permanent divisées (12a) a une force coercitive sur une surface et un intérieur, la force coercitive près des quatre surfaces qui sont parallèles à la direction d'aimantation de la pièce d'aimant (12a) est plus élevée que celle à l'intérieur de la pièce d'aimant (12a) en raison d'un traitement d'absorption/diffusion avec du Dy ou du Tb ; et la pièce d'aimant divisée (12a) a deux surfaces non traitées,
dans lequel
le procédé comprenant les étapes consistant à :

usiner un bloc d'aimant de départ pour former des pièces d'aimant divisées non traitées avant ledit traitement d'absorption/diffusion,
puis, effectuer ledit traitement d'absorption/diffusion pour former chacune desdites pièces d'aimant divisées (12a), et
intégrer les pièces d'aimant divisées résultantes (12a) pour former les segments d'aimants permanents (12).

**2.** Procédé selon la revendication 1, dans lequel les pièces d'aimant (12a) ont une section transversale rectangulaire.

**3.** Procédé selon la revendication 1 ou 2, dans lequel l'étape consistant à laisser du Dy ou du Tb se diffuser à partir des quatre surfaces vers l'intérieur de la pièce d'aimant de terres rares à base Nd fritté (12a) comprend l'application d'une poudre d'oxyde de Dy ou de Tb, d'une poudre de fluorure de Dy ou de Tb, ou d'une poudre d'alliage contenant du Dy ou du Tb sur des surfaces de la pièce d'aimant, puis le maintien la pièce d'aimant (12a) à une température élevée suffisante pour diffuser le Dy ou le Tb.

# FIG.1

**FIG.2A**

M
12a

**FIG.2B**

M
12a

**FIG.2C**

M
12a

**FIG.3A**

MAGNETIZATION
DIRECTION
M

T
L

12a

W

**FIG.3B**

MAGNETIZATION
DIRECTION
M

12

12a

# FIG.4A

COERCIVE
FORCE

ORIGINAL
COERCIVE
FORCE

12a

L

W

REGION WHERE
COERCIVE FORCE
IS IMPROVED

REGION WHERE
COERCIVE FORCE
IS NOT IMPROVED

# FIG.4B

COERCIVE
FORCE

12a

T

# FIG.5A

# FIG.5B

MAGNETIZATION
DIRECTION
M

12

EDDY CURRENT

12a

Y

Y

TEMPERATURE

L

STATOR
SIDE

SHAFT CENTER
SIDE

# FIG.6A

# FIG.6B

MAGNETIZATION
DIRECTION
M

MAGNETIZATION
DIRECTION
M

12

T

L

12a

W

12a

Y

Z

X

# FIG.7A

COERCIVE FORCE

ORIGINAL COERCIVE FORCE

L

W

REGION WHERE COERCIVE FORCE IS IMPROVED

REGION WHERE COERCIVE FORCE IS NOT IMPROVED

# FIG.7B

COERCIVE FORCE

T

# FIG.8

11 (ROTOR YOKE)

MAGNETIZATION
DIRECTION

12 (PERMANENT MAGNET
SEGMENT)

14 (STATOR YOKE)

13 (COIL)

FIG.9A

FIG.9B

FIG.9C

# FIG.10A

# FIG.10B

MAGNETIZATION DIRECTION

T

12a

L

W

MAGNETIZATION DIRECTION

12

12a

# FIG.11A

# FIG.11B

FIG.11A: MAGNETIZATION DIRECTION, EDDY CURRENT, Y, Z

FIG.11B: Y, TEMPERATURE, L, GAP FACE (STATOR SIDE), ROTOR YOKE FACE

MAGNETIZATION
DIRECTION

**FIG.12A**

12a

MAGNETIZATION
DIRECTION

**FIG.12B**

12a

MAGNETIZATION
DIRECTION

12a

**FIG.12C**

12a

12a

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 5031807 B
- JP 5021218 A
- WO 2006043348 A
- JP 2005354899 A

- EP 1705668 A
- JP 2005269693 A
- EP 1643513 A
- EP 2254131 A

### Non-patent literature cited in the description

- **K. D. DURST ; H. KRONMULLER.** THE COERCIVE FIELD OF SINTERED AND MELT-SPUN NdFeB MAGNETS. *Journal of Magnetism and Magnetic Materials,* 1987, vol. 68, 63-75
- **K. T. PARK ; K. HIRAGA ; M. SAGAWA.** Effect of Metal-Coating and Consecutive Heat Treatment on Coercivity of Thin Nd-Fe-B Sintered Magnets. *Proceedings of the Sixteen International Workshop on Rare-Earth Magnets and Their Applications,* 2000, 257

- **K. MACHIDA ; H. KAWASAKI ; T. SUZUKI ; M. ITO ; T. HORIKAWA.** Grain Boundary Tailoring of Sintered Nd-Fe-B Magnets and Their Magnetic Properties. *Proceedings of the 2004 Spring Meeting of the Powder & Powder Metallurgy Society,* 202